# EUROPEAN PATENT APPLICATION

(11) **EP 1 211 536 A1**
(43) Date of publication of application: **05.06.2002**
(21) Application number: 00310755.4
(22) Date of filing: 04.12.2000
(51) Int. Cl.: G02B 6/38

(54) **Connectorized optical fiber throughput through a faceplate**

(71) Applicant: LUCENT TECHNOLOGIES INC., Murray Hill, New Jersey 07974-0636 (US)
(72) Inventor: Schimpl, Peter, Buttenheim, Bavaria 98165 (DE); Seitz, Reinhold Johannes, Hilpoltstein, Bavaria 91161 (DE)
(74) Representative: Buckley, Christopher Simon Thirsk

(57) **Abstract**

The invention relates to optical fiber throughputs on plates to which an assembly having optical components is attached. It is an object to provide an improved and more effective optical fiber throughput on a plate of an optical component ensuring a very simple and space-efficient arrangement and an increased EMC-shielding.

The invention proposes to provide a plate (1) having an opening (2a, 2b) adapted for the leading through of an optical cable (3) terminated by a connector (4) from a rear side of the plate (1) and a contrivance (5) which is attachable to the plate (1) and is intended for holding at least one connector (4) and/or coupler (7) at the front side of the plate (1), wherein the contrivance (5) is adapted to be moveably mounted at the plate (1) and interacts with the opening (2a, 2b) such that at a first position of the contrivance (5) the opening (2a, 2b) is released for leading through the connector (4) terminating the optical cable (3), and at a second position of the contrivance (5) the opening (2a, 2b) is partially covered merely releasing a throughput (2b) for said optical cable.

## Description

### Description

The invention relates to a method of providing an optical fiber throughput on a plate for an assembly having optical components, to a module comprising a contrivance and a plate suitable for carrying out the method and to a contrivance and a plate both adapted to be used with the method.

Electronic and/or optical based equipment or systems are often of a modular type of construction.

For example, in the production of optical based equipment, it is customary for individual components to be initially pre-assembled, on carriers, such as printed wired boards for example, forming an assembly having optical components. Subsequently, a single or a plurality of such an assembly having optical components or in particular an optical circuit pack for telecommunication equipment is in turn arranged in system subracks, housings, racks and/or cabinets containing a back panel for further interconnection.

Usually, such an assembly having optical components include one or more optical fibers and comprises at least one optical fiber throughput on a front plate for mating the optical fiber to an associated optical component positioned outside that assembly. Therefore, a front plate for the assembly is provided with a recess or cutout to which optical couplers are attached for being mateable with associated optical components, such as optical connectors terminating the optical fibers or other specific fiber connector variants, as known for a person skilled in the art.

However, problems arise with regard to electromagnetic compatibility (EMC) requirements due to the fact that most of the current fiber optic couplers and/or connectors for such front plate assemblies do not provide any EMC-features.

Furthermore, since the optical connectors terminating the optical fibers are conventionally attached to the front plate from the rear side, i.e. from the side to which the assembly having optical components is arranged, the access to such connectors for cleaning the optical surface and/or for other reasons of maintenance is difficult. Hence, frequently an extraction of the assembly or circuit packs during the cleaning of connector surfaces is necessary.

Moreover, if an optical connector is attached to the front plate from the rear side the space required for the connector have to be taken into account during the production and can not be used for other electrical and optical components of the assembly.

An object of the invention is to provide an improved and more effective optical fiber throughput on a plate for an assembly having optical components avoiding the aforementioned problems relating to a throughput according to the state of the art.

In particular it is an object to provide a very simple and space-efficient optical fiber throughput ensuring an increased EMC-shielding of an assembly having optical components and an easy access to a connector attached to a plate for reasons of cleaning or maintenance.

The inventive solution of the object is achieved by a method incorporating the features of Claim 1 and by a module, a contrivance and a plate according to Claims 5, 6 and 19, respectively.

According to the invention it is proposed to provide a plate or a panel having an opening adapted for the leading through of an optical cable terminated by a connector from a rear side of the plate and a contrivance which is attachable to the plate and is intended for holding at least one connector at the front side of the plate, wherein the contrivance is adapted to be moveably mounted at the plate and interacts with the opening such that at a first position of the contrivance the opening is released for leading through the connector terminating the optical cable, and at a second position of the contrivance the opening is partially covered by the contrivance merely releasing a throughput for said optical cable.

Thus, by using a separate part which is adapted to hold the connector at the front side of the plate for an assembly having optical components the space behind the plate may be used for further electrical and/or optical components of the assembly, such as an optical circuit pack, and hence the inventive solution is very space-efficient.

Moreover, by covering the opening or cutout of the plate partially while merely releasing a throughput for said optical cable in working condition the arrangement provides an additional EMC-screening between the assembly and the mating connector enabling, for example, a reuse of existing connector systems for EMC-proof applications.

A further advantage is, that a very easy access to the connectors for cleaning of optical surface and for maintenance can be guaranteed and there is no need for extraction of the assembly or circuit pack during the cleaning of a connector surface is. Accordingly, especially with regard to specific customer premises, the entire handling and/or maintenance of optical packs in the field are significantly improved and more easier comparing to current optical fiber throughputs.

To provide a very simple and inexpensive contrivance according to a preferred embodiment of the invention, said contrivance is designed essentially in the form of an L-shaped bracket, the one side of which is apt to be linked together with a counter means and with the plate therebetween and the other side of the bracket is designed for comprising means for holding the connector and/or a coupler.

According to a very preferred embodiment, the linking of the bracket and of the counter means is provided by means of a screw which can be led through the opening of the plate resulting in a very simple moveable arrangement for covering or releasing parts of the opening or cutout.

By using a metal material for the contrivance, said arrangement withstands mechanical loads and also can be made EMC proof. Moreover a protection means, preferably a plastic cap, for the optical fiber against damaging can be used that is preferably apt to cover the means for holding protecting the optical components against unintentional damage and providing an additional protection for electrostatic discharges.

It is further proposed, that the contrivance comprises a device for guiding the optical fiber cable in a predetermined guideway advantageously having a curved section so that a definable minimal bending radius of fibers can be guaranteed. Additionally, means for holding the customer specific associated optical component to which a connector is connectable and/or means for holding and guiding additional optical fiber cables may be provided enabling a high amount of fibers that can be connected to one circuit pack.

According to preferred embodiments of the plate it is proposed to provide an opening or cutout having a smaller section adapted for the throughput of the optical cable and a larger section adapted for the leading through of the connector, wherein the larger section may be covered by the contrivance when the entire arrangement is installed. For simplicity reasons and to provide an useful throughput an opening in a keyhole like manner is proposed. Moreover, for the praxis it turned out, that a smaller section having a diameter of maximal 3mm is sufficient for EMC reasons.

Consequently the inventive solution provides an improved EMC and ESD performance for in substantial all existing connector types or optical couplers and can be implemented in existing and even new optical based systems, wherein an easy assembly and disassembly of optical modules is enabled.

Further advantages are evident from the following description of the invention in detail, in particular on the basis of preferred exemplary embodiments, with reference to the attached drawings, in which:
- Fig. 1: shows a greatly simplified and schematic representation of the preferred inventive approach providing an optical fiber throughput on a plate,
- Fig. 2: shows a general representation of an exemplary application comprising an optical circuit pack,
- Fig. 3: shows a partial view of the representation of Fig. 2 involving a protected contrivance attached to a front plate according to a preferred embodiment of the invention,
- Fig. 4: shows a further partial view of the representation of Fig. 2 involving two contrivance attached to the front plate with the protection removed, and
- Fig. 5: shows from the rear side of the front plate a contrivance attached thereto and carrying two optical fiber connectors.

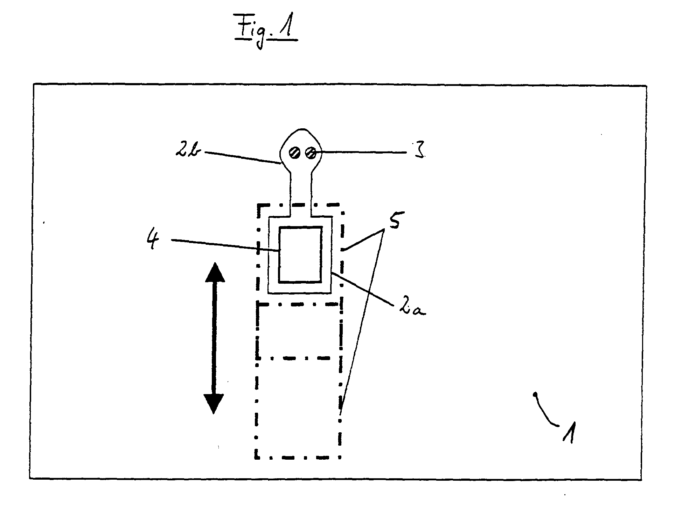

Reference firstly being made to Fig. 1 showing a greatly simplified and schematic representation of the inventive approach providing an optical fiber throughput on a plate or panel 1. An assembly having optical components (not shown) is arranged behind the plate or panel 1 at its rear side and the plate 1 is provided with an cutout or opening 2a, 2b adapted for the leading through of an optical cable 3 terminated by an connector 4 mateable to an associated optical component.

A support means or bracket 5, schematically depicted with dotted lines, is moveably mounted to the plate 1 and is adapted for holding the connector 4 at the front side of the plate 1. The support means 5 can be moved up and down, as designated in Fig. 1 by the double-arrow.

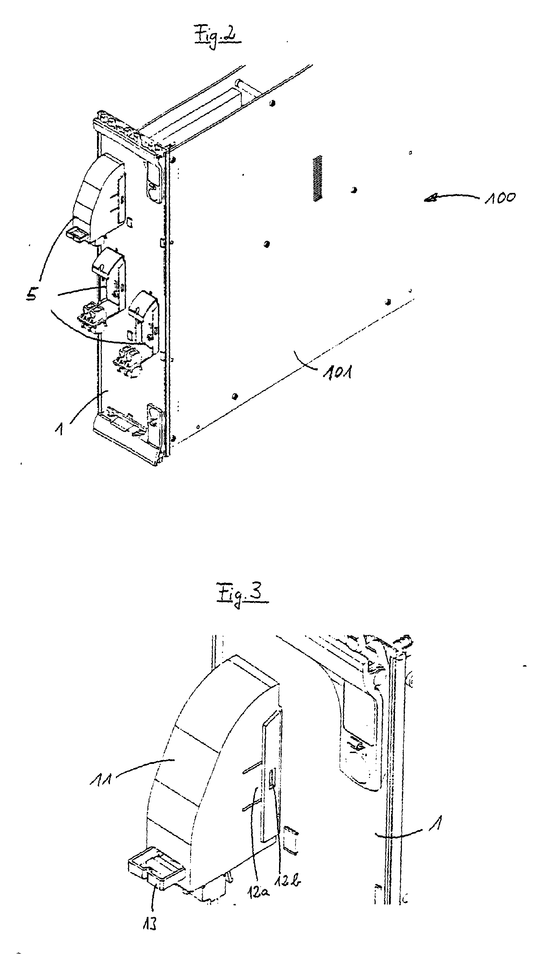

For leading through the connector 4 the support means 2a has to be moved downwardly to release the entire cutout 2a, 2b. Subsequently to the leading through of the connector 4 the support means 5 can be moved to an upper position to be fixed and to partially cover the opening 2a, 2b such that merely a section 2b of the cutout is released for ensuring a throughput for the optical cable 3 terminated by the connector 4. However, it has to be mentioned, that even if Fig. 2 shows a useful keyhole-like cutout with a greater cutout section 2a for leading through the connector 4 and a smaller cutout section 2b for the fiber cable 3 substantially any other kind of a shaped cutout can be provided, as it is obvious for a person skilled in the art.

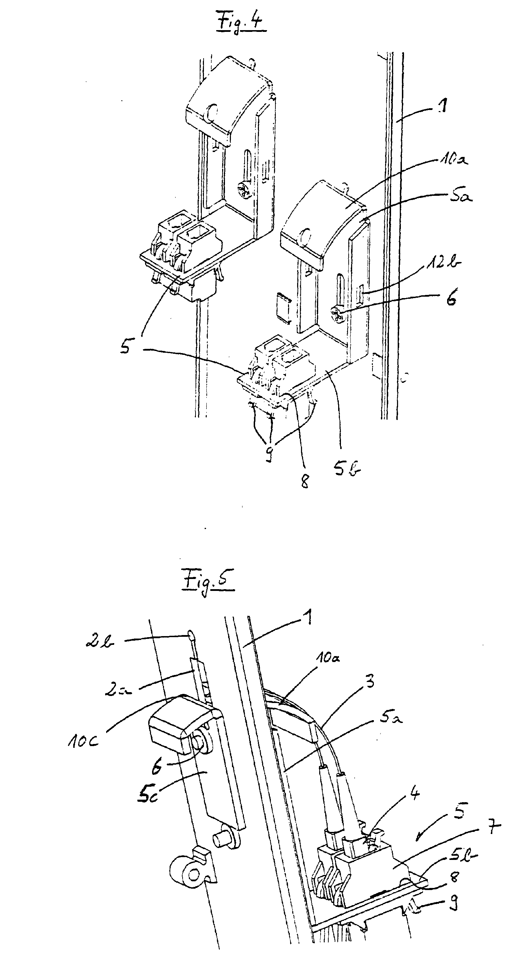

Referring to Fig. 2, 3, 4 and 5 an exemplary application incorporating a preferred embodiment of the invention is subsequently described in detail.

For an exemplary application incorporating the inventive solution an assembly having optical components such as an optical circuit pack 100 for telecommunication equipment is depicted in Fig. 2 and is intended to be inserted into a system subrack which contains an interconnection back panel. However the subrack is not depicted or described in any more detail. The circuit pack 100 comprises a plurality of optical components connected to optical fibers which have to be mated to associated optical components not incorporated by the circuit pack 100, as for example optical couplers or other specific fiber connector variants, as known for a person skilled in the art.

The assembly 100 is attached to the rear side of a front plate 1 and three support means 5 are mounted at the front side of the front plate 1, as shown in Fig. 2.

As can be best seen in Fig. 4 and 5, each of the support means 5 substantially is formed in a L-shaped manner, the one leg 5a of the support means 5 is linked with a counter plate 5c by means of a screw 6 which is led through the cutout section 2a of the front plate 1. The other leg 5b of the support means 5 is adapted to provide a holding function for optical components, as described in more detail below. With such an mounting arrangement, the support means 5 may be readily moved up and down guided by the screw 6 within the cutout section 2a and is fixable positioning by loosing or by tightening the screw connection 6. Even a rotation of the support means 5 around the axis of the screw 6 is possible to support different fiber routing directions.

The cutout 2a, 2b in the front plate 1 for the throughput of at least one optical fiber cable 3 from the assembly 100 is designed also for the leading through of an optical connector 4, usually a so-called behind the wall (BTW)-connector 4, terminating the optical fiber 3. For this reason the cutout preferably is shaped like a keyhole with a smaller section 2b for the fiber cables 3 and a larger section 2a for the fiber connectors 4.

By moving the carrier-plate or bracket 5 down, the larger cutout section 2a for the fiber connectors 4 is released and the fibers can be routed from the optical components on the circuit pack 100 to the front side.

The holding leg 5b of the support means 5 is apt to hold an associated optical component such as an optical coupler 7 or a line build out (LBO), for example, to which the fiber cable 3 may be mated. To accommodate various fiber connector variants the leg 5b has a cutout 8 for latching engagement, by using snap-in hooks for example, of the respective connector type. The holding leg 5b is provided with an specific angle to the carrier leg 5a, preferably of 90 degree, and also can be curved for example with an curve angle of 5 to 10 degree, for better accommodation of the fiber cables.

Subsequently to the mounting of the fibers, the larger cutout section 2a is covered by the sandwich arrangement of the plate-like carrier leg 5a on the front side and the counter plate 5c on the rear side of the faceplate 1 by sliding the support means 5 upwardly. For ensuring a sufficient EMC-effect an uncovered section 2b with a diameter of maximal about 3mm is appropriate.

By using metal parts for the support means 5, especially for the carrier leg 5a and the counter plate 5c, and also having this area on the circuit pack front plate 1 free from paint and lacquer, this arrangement is also EMC proof.

Both the carrier leg 5a and the counter plate 5c have a curved section 10a or 10c on the top so that a minimum bending radius for fiber cables 3 is guaranteed, whereby the angle between the fiber cable 3 and front plate 1 formed by the curved sections 10a or 10c can be selected in respect to the circuit pack requirements.

An additional protection cover 11 made of plastic for example can be snapped onto the support means 5 by means of complementary interengaging means 12a and 12b formed at the cover 11 and the support means 5, respectively. The cover 11 protects the fiber cables 3 and the connectors 4 and 7 from being unintentionally damaged and provides additional protection for electrostatic discharge (ESD).

Moreover, fiber clips 13 are integrated to facilitate fiber routing on each faceplate.

Since the support means 5 can be adapted to hold a plurality of fiber connectors and further fibers additionally can be held by the fiber clips 13, the entire arrangement can be used for one or more optical fibers and a high amount of fibers can be connected to one circuit pack by using.

Furthermore, an exact positioning of the support means 5 with subsequent fixing is ensured just by the use very simple components and their corresponding design, without meeting extremely precise requirements. Thus a fiber routing in substantial to all required directions is feasible. Moreover, it is provided a very easy assembly and disassembly of all optical components or modules, wherein the accuracy remains permanently high, even after repeated release of the connection, especially since the components used can scarcely be damaged unintentionally by use of the protection cover.

Moreover, the invention provides additional component space for the circuit pack 100 forming the basis of more efficient system designs. By supporting the optical fiber connector 4 spaced apart from the circuit pack 100 with the support means covered and the cutout of the front plate partially covered an improved EMC and ESD performance for in substantial all existing connector types and LBOs is achieved.

It should be obvious for a person skilled in the art, that the exemplary embodiment of the invention as described with reference to the accompanied figures is varying with regard to and can be adapted to specific applications without departing the scope of the invention.

## Claims

1. Method of providing an optical fiber throughput on a plate (1) for an assembly having optical components, whereby the plate (1) is provided with an opening (2a, 2b) adapted for the leading through of an optical cable (3) terminated by a connector (4) mateable to an associated optical component (7),
comprising the method steps of:
a) providing a contrivance (5) which is adapted to be moveably mounted to the plate (1) and is intended for holding the connector (4) and/or a coupler (7) terminating the optical fiber cable (3),
b) assembling a rear side of the plate (1) to the assembly (100) having optical components,
c) mounting the contrivance (5) in a first position to the plate (1),
d) routing the optical fiber from the rear side through the opening (2a, 2b) of the plate (1) to its front side,
e) positioning the connector (4) on said contrivance (5) at the front side of the plate,
f) moving the contrivance (5) from the first position to a second position thereby partially covering the opening (2a, 2b) with ensuring a throughput (2b) of said optical cable (3),
g) fixing the contrivance(5)

2. Method according to Claim 1, wherein the steps c) and d) being carried out in a reverse order.

3. Method according to claims 1 or 2, wherein step e) comprises the positioning of the associated optical component (7) on said contrivance (5) at the front side of the plate (1) and the connecting of the connector (4) to said component (7).

4. Method according to Claim 1, 2 or 3, whereby step g) comprises the fixable positioning of the connector (4) by rotating the contrivance (5) around an axis substantially perpendicular to the front side of plate (1).

5. Module comprising a plate (1) for an assembly having optical components and a contrivance (5), whereby
- the plate (1) is provided with an opening (2a, 2b) adapted for the leading through of an optical cable (3) terminated by a connector (4) from a first side of the plate (1), and
- the contrivance (5) is attached to the plate (1) and is intended for holding the connector (4) at the opposite side of the plate (1),
wherein the contrivance (5) is adapted to be moveably mounted to the plate (1) and interacts with the opening (2a, 2b) such that at a first position of the contrivance (5) the opening (2a, 2b) is released for leading through the connector (4) terminating the optical cable (3), and at a second position of the contrivance (5) the opening (2a, 2b) is partially covered while ensuring a throughput (2b) for said optical cable (3).

6. Contrivance for providing an optical fiber throughput on a plate for an assembly having optical components, whereby the plate (1) is provided with an opening (2a, 2b) adapted for the leading through of at least one optical cable (3) terminated by an connector (4) mateable to an associated optical component (7),
comprising:
- a device (5, 6) for the mountable positioning to the plate (1), and
- means (5b, 7, 8, 9) for holding the connector (4) terminating the at least one optical cable (3) at the plate (1) on the opposite side of the attachable assembly having optical components (100),
wherein the device (5, 6)for the positioning is mountable at a first position to release the opening (2a, 2b) for leading through the connector (4) terminating the optical cable (3) and at a second position for partially covering the opening (2a, 2b) while ensuring a throughput (2b) for said optical cable (3).

7. Contrivance of claim 6, wherein the device (5, 6) for the mountable positioning comprises a carrier means (5a, 5b) and a counter means (5c) and a releasable fastener means (6) for linking the carrier means (5a, 5b) and the counter means (5c) together with the plate (1) therebetween.

8. Contrivance of claim 7, wherein the carrier means (5a, 5b) is formed like an angle, the one leg (5a) of which is apt to be linked together with the counter means (5c) and the other leg (5b) of which is designed for comprising the means for holding (5b, 7, 8, 9).

9. Contrivance according Claim 7 or 8, wherein the fastener means (6) is provided by means of a screw which can be led through the opening (2a, 2b) of the plate (1).

10. Contrivance according to one of Claims 7 to 9, including a guiding device (10a, 10c) comprises a curved section and is arranged at the one leg (5a) and the counter means (5c) for the mountable positioning.

11. Contrivance according to Claims 6 to 10, comprising a device (10a, 10c, 13) for guiding optical fiber cables in a predetermined guideway.

12. Contrivance according to Claim 11, wherein the device for guiding optical fiber comprises at least one fiber holder or fiber clip (13).

13. Contrivance according to one of Claims 6 to 12, wherein the means for holding (5b, 7, 8, 9) is apt to comprise the associated optical component (7) to which the connector (4) is connectable.

14. Contrivance according to one of Claims 6 to 13, wherein at least the device (5, 6) for mountable positioning consists of metal material.

15. Contrivance according to one of Claims 6 to 14, comprising means for protection (11) the optical fiber against damaging.

16. Contrivance according to Claim 15, wherein the means for protection (11) is apt to cover the means for holding (5b, 7, 8, 9) and is fixed by means of complementary latch means (12a, 12b).

17. Contrivance according to any of Claims 6 to 16, comprising means (13) for holding an additional optical fiber cable.

18. Contrivance according to any of Claims 6 to 17, wherein the means for holding (5b, 7, 8, 9) is apt hold a plurality of connectors (4).

19. Plate for an assembly (100) having optical components, comprising at least one opening (2a, 2b) for the throughput of at least one optical cable (3) terminated by an connector (4) mateable to an associated optical component (7), **characterized in that** the at least one opening (2a, 2b) is provided with a smaller section (2b) adapted for the throughput of the at least one optical cable (3) and with a larger section (2a) adapted for the leading through of the connector (4).

20. Plate according to claim 19, wherein the opening (2a, 2b) is provided in a keyhole like manner.

21. Plate according to claim 19 or 20, wherein the smaller section (2b) has a diameter of less than 3mm.
